(19) Europäisches Patentamt
European Patent Office
Office européen des brevets

(11) **EP 4 327 245 B1**

(12) **EUROPEAN PATENT SPECIFICATION**

(45) Date of publication and mention
of the grant of the patent:
**02.07.2025 Bulletin 2025/27**

(21) Application number: **22734127.8**

(22) Date of filing: **30.05.2022**

(51) International Patent Classification (IPC):
***G06N 3/084*** (2023.01)    ***G06N 3/006*** (2023.01)
***G06N 3/045*** (2023.01)

(52) Cooperative Patent Classification (CPC):
**G06N 3/084; G06N 3/006; G06N 3/045**

(86) International application number:
**PCT/EP2022/064563**

(87) International publication number:
**WO 2022/248734 (01.12.2022 Gazette 2022/48)**

(54) **ENHANCING POPULATION-BASED TRAINING OF NEURAL NETWORKS**

VERBESSERUNG DES POPULATIONSBASIERTEN TRAININGS VON NEURONALEN NETZEN

AMÉLIORATION DE L'ENTRAÎNEMENT REPOSANT SUR UNE POPULATION DE RÉSEAUX
NEURONAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2021 US 202163194592 P**

(43) Date of publication of application:
**28.02.2024 Bulletin 2024/09**

(73) Proprietor: **DeepMind Technologies Limited
London EC4A 3TW (GB)**

(72) Inventors:
• **DALIBARD, Valentin Clement
London N1C 4AG (GB)**
• **JADERBERG, Maxwell Elliot
London N1C 4AG (GB)**

(74) Representative: **Marks & Clerk GST
1 New York Street
Manchester M1 4HD (GB)**

(56) References cited:
**US-A1- 2020 320 399    US-A1- 2021 097 443**

• **TOBIAS DOMHAN ET AL: "Speeding up
Automatic Hyperparameter Optimization of Deep
Neural Networks by Extrapolation of Learning
Curves", PROCEEDINGS OF THE 24TH
INTERNATIONAL JOINT CONFERENCE ON
ARTIFICIAL INTELLIGENCE, 25 July 2015
(2015-07-25), XP055265011**
• **VALENTIN DALIBARD ET AL: "Faster
Improvement Rate Population Based Training",
ARXIV.ORG, CORNELL UNIVERSITY LIBRARY,
201 OLIN LIBRARY CORNELL UNIVERSITY
ITHACA, NY 14853, 28 September 2021
(2021-09-28) - 28 September 2022 (2022-09-28),
XP091061673**

**EP 4 327 245 B1**

**Description**

BACKGROUND

Neural networks are machine learning models that employ one or more layers of nonlinear units to predict an output for a received input. Some neural networks include one or more hidden layers in addition to an output layer. The output of each hidden layer is used as input to the next layer in the network (i.e., the next hidden layer or the output layer). Each layer of the network generates an output from a received input in accordance with current values of a respective set of parameters. This specification relates to training machine learning models, including neural networks.

Neural networks can be trained according to values of one or more hyperparameters to learn optimal values for one or more network parameters. Hyperparameters are settings for training a neural network, and are typically configured before the neural network is trained. For example, the learning rate or a learning rate schedule for a neural network can be established before training. As another example, the weights for different terms in the loss function can be established before training or adjusted according to a fixed, predetermined schedule during training. Network parameters, including, e.g., weights and biases of the network layers, are parameters that are updated during training.

Conventionally, a hyperparameter search to identify optimal hyperparameter values for training a model is performed before training the model to learn optimal network parameter values using the identified optimal hyperparameter values.

US 2021/097443 A1 relates to methods, systems, and apparatus, including computer programs encoded on computer storage media, for training a machine learning model.

"Speeding up Automatic Hyperparameter Optimization of Deep Neural Networks by Extrapolation of Learning Curves" (by Domhan et al), PROCEEDINGS OF THE 24TH INTERNATIONAL JOINT CONFERENCE ON ARTIFICIAL INTELLIGENCE, published 25 July 2015 is also relevant

US 2020/320399 A1 relates to a method for receiving training data for training a neural network to perform a machine learning task and for determining, using the training data, an optimized neural network architecture for performing the machine learning task.

SUMMARY

This specification describes a system implemented as computer programs on one or more computers in one or more locations that trains a neural network having a plurality of network parameters to perform a particular machine learning task, while at the same time searching for hyperparameter values to train the neural network.

According to the invention, this specification describes a training method for training a neural network to perform a machine learning task. The method is implemented by a system including one or more computers. The system maintains data specifying (i) a plurality of candidate neural networks and (ii) a partitioning of the plurality of candidate neural networks into a plurality of partitions.

For each of the candidate neural networks, the maintained data includes data that specifies: (i) respective values of a plurality of network parameters for the candidate neural network and (ii) respective values of one or more hyperparameters for the candidate neural network.

The maintained data further specifies a respective fitness function for each of the partitions that is used to evaluate each of the candidate neural networks in the partition. The fitness functions for at least two of the partitions are different from one another;

The system repeatedly performs operations, including: training each of the candidate neural networks to update the respective values of the plurality of network parameters for the candidate neural network; evaluating each candidate neural network using the respective fitness function for the partition to which the candidate neural network belongs to determine a respective fitness metric for the candidate neural network; and for each partition, updating the respective values of the one or more hyperparameters for at least one of the candidate neural networks in the partition based on the respective fitness metrics of the candidate neural networks in the partition. That is, a fitness metric is the output value produced by evaluating a fitness function.

After repeatedly performing the operations, the system selects, from the maintained data, the respective values of the network parameters of one of the candidate neural networks.

In some implementations, evaluating each candidate neural network may take place after training each candidate neural network. In other implementations, the evaluation may take place as the candidate neural networks are being trained.

According to the invention, for a first partition in the plurality of partitions, the fitness function measures a performance of the candidate neural networks in the partition on the machine learning task. For at least a second partition in the plurality of partitions, the fitness function measures, for each candidate neural network in the second partition, a relative rate of improvement in the performance of a respective evaluator neural network that has the same respective

2

network parameter values as the candidate neural network on the machine learning task.

In some implementations of the training method, the method further includes: for each of the partitions, identifying the candidate neural network in the partition that has a maximum fitness metric as a target neural network for the partition. For each candidate neural network in the second partition, the respective evaluator neural network for the candidate neural network has the same respective hyperparameter values as the target neural network in a corresponding partition in the plurality of partitions that is different from the second partition.

According to the invention, for each candidate neural network in the second partition, to evaluate the candidate neural network using the respective fitness function, the system performs training of the respective evaluator neural network for the candidate neural network to update the network parameter values of the evaluator neural network. The system further generates data specifying a training curve for the candidate neural network during the training of the respective evaluator neural network. The data specifying the training curve includes a sequence of training step numbers and a respective performance metric corresponding to each of the sequence of training step numbers. That is, the training curve provides a measurement of training performance over time. The system further computes the fitness metric of the candidate neural network based on at least the training curve for the candidate neural network.

In some implementations of the training method, for each candidate neural network in the second partition, to compute the fitness metric, the system computes a plurality of comparison results for comparing the training curve for the candidate neural network with the training curves for the other candidate neural networks in the second partition; and computes fitness metric of the candidate neural network by combining the plurality of comparison results.

In some implementations of the training method, to compute one of the plurality of comparison results for the candidate neural network in the second partition, the system identifies, in the training curves of the candidate neural network and a second candidate neural network in the partition, overlapping curve sections that include a first curve section in the candidate neural network and a second curve section in the second candidate neural network. The system further identifies a first maximum performance metric in the first curve section, identifies a second maximum performance metric in the second curve section, and computes the comparison result according to a comparison between the first maximum performance metric and the second maximum performance metric.

In some implementations of the training method, to identify the overlapping curve sections, the system identifies, from the training curves of the candidate neural network and the second candidate neural network, a first training curve and a second training curve, wherein the first training curve has a higher performance metric at the beginning time step of the training curve. The system further identifies the beginning time step of the first training curve as the starting point of the overlapping curve section of the first training curve, and identifies the earliest respective time step in the second training curve that corresponds to a performance metric reaching or exceeding the performance metric in the first training curve at the beginning time step of the first training curve.

In some implementations of the training method, to compute the comparison result, the system further performs smoothing operations on the training curves before identifying the overlapping curve sections.

In some implementations of the training method, to compute the comparison result, in response to not identifying any overlapping curve sections in the training curves, adjusting one of the training curves by subtracting each of the performance metric values of the training curve by a value.

In some implementations of the training method, for each candidate neural network in the second partition, the system further performs: during the training of the respective evaluator neural network, determining whether a success criterion is satisfied; and in response to the success criterion being satisfied: updating the maintained data for the network parameters of the target neural network in the corresponding partition that is different from the second partition with current values of the network parameters of the respective evaluator neural network when the success criterion is satisfied; and terminating the training of the respective evaluator neural network.

In some implementations of the training method, to determine whether the success criterion is satisfied, the system computes a comparison value for comparing the training curve for the respective evaluator neural network and the training curve for the target neural network, and determines whether the success criterion is satisfied based on at least the comparison value. In some implementations, the system further computes a statistical metric for comparing the training curve for the respective evaluator neural network and the training curve for the respective target neural network, and determines that the success criterion is satisfied in response to the comparison value being greater than 0 and the statistical metric being greater than a threshold value.

According to the invention, the system performs the training of at least two of the candidate neural networks in parallel, and further performs training of the respective evaluator neural network in parallel with training the at least two of the candidate neural networks.

In one aspect, there is provided a method for training a neural network to perform a machine learning task, the method implemented using a system comprising a plurality of computing units. The method comprises maintaining data specifying (i) a plurality of candidate neural networks and (ii) a partitioning of the plurality of candidate neural networks into a plurality of partitions, wherein the maintained data comprises: for each of the candidate neural networks, data specifying: (i) respective values of a plurality of network parameters for the candidate neural network and (ii) respective values of one or more hyperparameters for the candidate neural network, and data specifying a respective fitness function for each of the partitions that is used to evaluate each of the candidate neural networks in the partition, wherein the fitness functions for at least two of the partitions are different from one another. The method further comprises: repeatedly performing operations comprising: training each of the candidate neural networks to update the respective values of the plurality of network parameters for the candidate neural network; wherein the training of each candidate neural network is performed in parallel and each candidate neural network is assigned to a computing unit of the plurality of computing units for training; evaluating each candidate neural network using the respective fitness function for the partition to which the candidate neural network belongs to determine a respective fitness metric for the candidate neural network; wherein the evaluation is performed in parallel and each candidate neural network is assigned to a computing unit of the plurality of computing units for evaluation; and for each partition, updating the respective values of the one or more hyperparameters for at least one of the candidate neural networks in the partition based on the respective fitness metrics of the candidate neural networks in the partition. The method further comprises: after repeatedly performing the operations, selecting, from the maintained data, the respective values of the network parameters of one of the candidate neural networks.

It will be appreciated that the computing unit assignments for training and evaluation of a candidate neural network may be the same or different. In some implementations, the plurality of computing units may be divided into two sets, one set for performing training and one set for performing evaluations. The operations carried out in parallel may be performed asynchronously. It is possible that one or more candidate neural networks are undergoing training at the same time as one or more candidate neural networks are being evaluated. It is also possible that evaluation of a candidate neural network is performed whilst the candidate neural network is being trained. A computing unit may be assigned one or more of the candidate neural networks as appropriate. The assignment may be dynamically changed during training or evaluation. The system may be a distributed system. The system may comprise a Tensor Processing Unit (TPU). Updating the respective values of the one or more hyperparameters for each partition may be carried out by any appropriate computing unit. Likewise, the selection of respective values of network parameters of one of the candidate neural networks from the maintained data may be carried out by any appropriate computing unit.

This specification also provides a system including one or more computers and one or more storage devices storing instructions that when executed by the one or more computers, cause the one or more computers to perform the training method above.

This specification also provides one or more computer storage media storing instructions that when executed by one or more computers, cause the one or more computers to perform the training method described above.

The subject matter described in this specification can be implemented in particular implementations so as to realize one or more of the following advantages.

By using the described training techniques in which the neural network is trained in a manner that optimizes parameters and hyperparameters jointly through the PBT process, the neural network can be trained to generate network outputs that are more accurate than those generated by networks trained using conventional techniques. Additionally, the neural network can be trained more quickly, i.e., in terms of wall clock time, than other approaches.

The described techniques further enhance the efficacy of the training process by partitioning the population of candidate neural network into partitions, and performing the PBT within each partition in accordance with a fitness function dedicated to that partition. This overcomes potential drawbacks of a regular PBT process, where the *exploit-and-explore* process may favor decisions that result in immediate improvements in performance but lead to unsatisfactory or suboptimal performance later in the training process. By partitioning the population of candidate neural network into partitions, some of the partitions can be trained in accordance with fitness functions that are designed to converge the hyperparameters to values corresponding to a different section of a good hyperparameter schedule. Thus, the described techniques avoid making purely greedy updates to hyperparameter values and instead learn a hyperparameter schedule that results in improved performance of the resulting neural network on the machine learning task.

The details of one or more embodiments of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example of a training system.

FIG. 2 illustrates an example process for training a neural network.

FIG. 3 shows examples of training curves and a process for comparing the training curves.

FIG. 4 is a flow diagram illustrating an example process for training a neural network.

FIG. 5 shows a comparison of the performances of using different training methods for training a neural network for performing an image classification task.

FIG. 6 shows a comparison of the performances of using different training methods for training a neural network for performing a reinforcement learning task.

Like reference numbers and designations in the various drawings indicate like elements.

DETAILED DESCRIPTION

Identifying the optimal hyperparameters or the optimal schedule of the hyperparameters can be critical for successfully and efficiently training a neural network. This specification describes systems and methods for training a neural network having a plurality of network parameters to perform a particular machine learning task, while at the same time searching for hyperparameter values for training the neural network.

The hyperparameters can include any of a variety of values that are not learned during the training process but that can impact the performance of the trained neural network, the efficiency of the training process, or both. For example, hyperparameters can include any of: an optimizer that is used for the training, a learning rate that is used for the training, a weight decay factor that is used for the training, a batch size that is used for the training, a depth of the neural network that is being trained, respective weights assigned to one or more of the terms in the loss function that is used for the training, and so on.

In particular, the system trains the neural network based on a population of candidate neural networks that has been partitioned into multiple partitions. The system performs population-based training (PBT) for each partition of candidate neural networks in accordance with a fitness function specific to that partition.

In general, the respective machine learning task performed by the trained neural network can be any appropriate machine learning task.

For example, the machine learning task is a computer vision task (also referred to as an "image processing task"). In other words, the neural network is a convolutional neural network or a different type of neural network (e.g., a transformer based neural network) that is configured to receive an input image and to process the input image to generate a network output for the input image, i.e., to perform some kind of image processing task. In this specification, processing an input image refers to processing the intensity values of the pixels of the image using a neural network.

For example, the task may be image classification and the output generated by the neural network for a given image may be scores for each of a set of object categories, with each score representing an estimated likelihood that the image contains an image of an object belonging to the category.

As another example, the task can be image embedding generation and the output generated by the neural network can be a numeric embedding of the input image. That is, an encoding of the input image may be produced.

As yet another example, the task can be object detection and the output generated by the neural network can identify locations in the input image, e.g., bounding boxes or other geometric regions within the image, at which particular types of objects are depicted.

As yet another example, the task can be image segmentation and the output generated by the neural network can define for each pixel of the input image which of multiple categories the pixel belongs to.

More generally, however, the task can be any of a variety of tasks, including tasks that process inputs other than images.

As an example, if the inputs to the neural network are Internet resources (e.g., web pages), documents, or portions of documents or features extracted from Internet resources, documents, or portions of documents, the task can be to classify the resource or document, i.e., the output generated by the neural network for a given Internet resource, document, or portion of a document may be a score for each of a set of topics, with each score representing an estimated likelihood that the Internet resource, document, or document portion is about the topic.

As another example, if the inputs to the neural network are features of an impression context for a particular advertisement, the output generated by the neural network may be a score that represents an estimated likelihood that the particular advertisement will be clicked on.

As another example, if the inputs to the neural network are features of a personalized recommendation for a user, e.g., features characterizing the context for the recommendation, e.g., features characterizing previous actions taken by the user, the output generated by the neural network may be a score for each of a set of content items, with each score representing an estimated likelihood that the user will respond favorably to being recommended the content item.

As another example, if the input to the neural network is a sequence of text in one language, the output generated by the neural network may be a piece of text in another language that is a translation of the input text into the other language.

As another example, the task can be a reinforcement learning task, and the trained neural network is included in a reinforcement learning system for controlling an agent to interact with an environment by performing actions that are selected by the neural network in response to receiving observations that characterize the current state of the environment.

In general, the reinforcement learning system receives data characterizing the current state of the environment and selects an action from a set of actions to be performed by the agent in response to the received data. Once the action has been selected by the reinforcement learning system, the agent performs the action to interact with the environment. Generally, the agent interacts with the environment in order to perform a particular task, i.e., achieve a specified result, and the reinforcement learning system receives a reward value in response to the agent performing a selected action that reflects the progress of the agent toward performing the particular task. The reinforcement learning system selects actions in order to maximize the likelihood of completing the task, for example, by maximizing an expected cumulative reward or other reinforcement signal that accumulates from the immediate rewards.

In some implementations, the environment is a real-world environment and the agent is a control system for a mechanical agent interacting with the real-world environment. The agent may be a mechanical or electronic agent and the actions may comprise control inputs to control the mechanical or electronic agent. The observations may be derived from sensors, for example image sensors, and/or they may be derived from electrical or mechanical signals from the agent. For example, the agent may be a control system integrated in an autonomous or semi-autonomous vehicle navigating through the environment. In these implementations, the actions may be possible control inputs to control the vehicle and the result that the agent is attempting to achieve is to satisfy objectives for the navigation of the vehicle through the real-world environment. For example, the objectives can include one or more of: reaching a destination, ensuring the safety of any occupants of the vehicle, minimizing energy used in reaching the destination, maximizing the comfort of the occupants, and so on.

In some further implementations, the environment is a real-world environment and the agent is a computer system that generates outputs for presentation to a user. For example, the environment may be a patient diagnosis environment such that each state is a respective patient state of a patient, i.e., as reflected by health data characterizing the health of the patient, and the agent may be a computer system for suggesting treatment for the patient. In this example, the actions in the set of actions are possible medical treatments for the patient and the result to be achieved can include one or more of maintaining a current health of the patient, improving the current health of the patient, minimizing medical expenses for the patient, and so on. The observations may comprise data from one or more sensors, such as image sensors or biomarker sensors, and/or may comprise processed text, for example from a medical record.

In some other implementations, the environment is a simulated environment and the agent is implemented as one or more computer programs interacting with the simulated environment. For example, the simulated environment may be a virtual environment in which a user competes against a computerized agent to accomplish a goal and the agent is the computerized agent. In this example, the actions in the set of actions are possible actions that can be performed by the computerized agent and the result to be achieved may be, e.g., to win the competition against the user.

As a component of the reinforcement learning system, the trained neural network can output data for selecting actions to be performed by the agent interacting with the environment. The neural network has a set of network parameters and is configured to receive an input observation characterizing a state of the environment and to process the input observation in accordance with the network parameters to generate a network output that includes an action selection output that defines an action selection policy for selecting an action to be performed by the agent in response to the input observation.

During training of a reinforcement learning neural network, the algorithm can update the network parameters of the reinforcement learning neural network by minimizing a loss function, which measures the difference between a predicted action selection output and a target action selection output. For example, for a deep Q network (DQN), the algorithm can represent the loss function as an L2 distance between a target Q value calculated using a target network and a prediction Q value calculated by a prediction network.

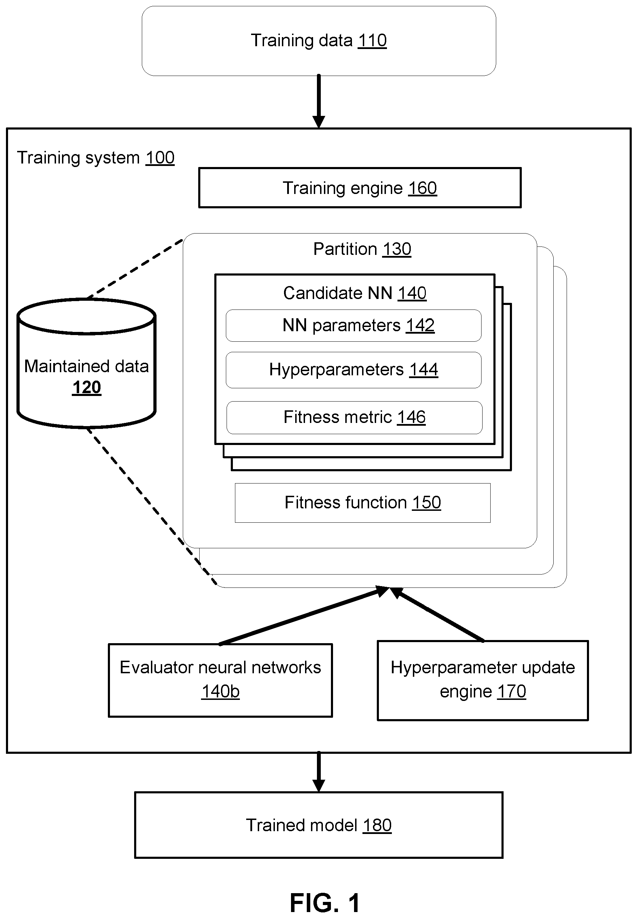

FIG. 1 shows an example of a training system 100 for training a machine learning model, e.g., a neural network, to perform a particular machine learning task. The system 100 is an example of a system implemented as computer programs on one or more computers in one or more locations, in which the systems, components, and techniques described below can be implemented.

The training system 100 can receive training data 110 and output data specifying a trained model 180 that can be implemented on one or more computers to perform a task. Examples of tasks include speech recognition, machine translation, and image recognition. The training data 110 can include one or more training examples each labeled with respective ground-truth output values. The training data 110 can be organized according to any appropriate data structure, e.g., a vector, a matrix, or generally a tensor of any degree.

The training system 100 can output data specifying the trained model 180, including the model's architecture, as well as trained model parameter values for the trained model 180. For example, the training system 100 can output data specifying a trained neural network, including trained weights for the neural network at each network layer.

In some implementations, the training system 110 can also output the hyperparameter values used to train the machine learning model, and can also output a hyperparameter schedule representing the change of hyperparameter values during training for the trained model 180.

The training system 100 can provide data specifying the trained model 180 for later use in processing new inputs for the trained model 180. Alternatively or in addition, the training system 100 can instantiate a machine learning model having the model architecture and the trained model parameter values and use the model to process new inputs.

During the training of the neural network, the system 100 maintains data 120 that specifies a plurality of candidate neural networks 140 and a partitioning of the plurality of candidate neural networks 140 into a plurality of partitions 130. The partitioning refers to a process of dividing the plurality of candidate neural networks 140 into multiple disjoint sub-groups (i.e., the plurality of partitions 130). Each partition 130 contains the respective sub-group of the candidate neural networks 140. The maintained data includes, for each of the candidate neural networks 140, data specifying: (i) respective values of a plurality of network parameters 142 for the candidate neural network and (ii) respective values of one or more hyperparameters 144 for the candidate neural network 140. The maintained data 120 further includes data specifying, for each of the partitions 130, a respective fitness function 150 that is used to evaluate each of the candidate neural networks 140 in the partition 130.

The fitness functions 150 for at least two of the partitions are different from one another. As a particular example, the fitness function 150 for one of the partitions (e.g., the first partition $\mathcal{P}_1$) measures the performance of the candidate neural networks in the partition for performing the machine learning task, while the fitness function 150 for at least one other partition (e.g., partitions $\mathcal{P}_2 ... \mathcal{P}_n$) measure a relative rate of improvement in the performance on the machine learning task of a respective evaluator neural network 140b that has the same respective network parameter values as the candidate neural network 140.

In general, the fitness function that measures the relative rate of improvement in the performance enables focusing the candidate neural networks in the respective partition on hyperparameters corresponding to a particular section of an effective hyperparameter schedule.

The system 100 includes a training engine 160 and a hyperparameter update engine 170 that repeatedly perform multiple operations to update the maintained data 120.

In each of the repetitions for updating the maintained data 120, the training engine 160 trains each of the candidate neural networks 140 to update the respective values of the plurality of network parameters for the candidate neural network 140. The training of the candidate neural networks may be performed using any neural network training technique as appropriate for the machine learning task. For example, backpropagation and stochastic gradient descent or reinforcement learning techniques may be used. The system 100 evaluates each candidate neural network using the respective fitness function 150 for the partition 130 to which the candidate neural network 140 belongs to determine a respective fitness metric 146 for the candidate neural network 140.

The hyperparameter update engine 170 updates, for each partition 130, the respective values of the one or more hyperparameters 144 for at least one of the candidate neural networks 140 in the partition based on the respective fitness metrics 146 of the candidate neural networks in the partition.

The above operations can be repeated until a stop condition is reached. For example, the system can repeat the operations until the performance metric of a candidate neural network reaches a threshold value. In another example, the system can repeat the operations until a compute budget, such as a total number of training steps, has been reached. After repeatedly performing the above operations, the system 100 can select, from the maintained data 120, the respective values of the network parameters 142 of one of the candidate neural networks 140 (e.g., the best performing candidate neural network according to the performance metric) as the network parameters of the neural network to be trained.

In some implementations, the system 100 evaluates the candidate neural networks 140 in some of the partitions (e.g., partitions $\mathcal{P}_2 ... \mathcal{P}_n$) by generating training curves during the training of the respective evaluator neural networks 140b that copy the network parameters of the corresponding candidate neural networks. The system 100 can evaluate, based at least on a respective training curve, a rate of improvement in the performance on the machine-learning task of the candidate neural network. For example, for a particular candidate neural network 140, the system 100 can compute the fitness metric 146 of the particular candidate neural network 140 based on at least the training curve generated during training of the respective evaluator network 140b of the particular candidate neural network.

According to the invention, the system 100 performs the training of multiple candidate neural networks 140 in parallel. For example, the system 100 can assign a respective computing unit to perform the training of a particular candidate neural networks 140, and assign a different computing unit to perform the training of a different candidate neural networks 140, and perform the trainings of different candidate neural networks in parallel. A computing unit may be, for example, a computer, a core within a computer having multiple cores, or other hardware or software within a computer capable of independently performing the computation required by the system 100 for executing the training process.

According to the invention, the system 100 performs the training of one or more of the candidate neural networks 140 and an evaluator neural network 140b in parallel. As such, the system 100 can be adapted to and take advantages of parallel processing systems. In particular, because the system can execute the training operations for multiple neural networks in parallel, the trainings take a shorter wall clock time compared to performing sequential trainings of the multiple neural networks. Moreover, since at least some of the training operations can be performed asynchronously and in a decentralized manner for different neural networks, the training may have reduced overhead and reduced infrastructure requirements for effectively train the neural networks.

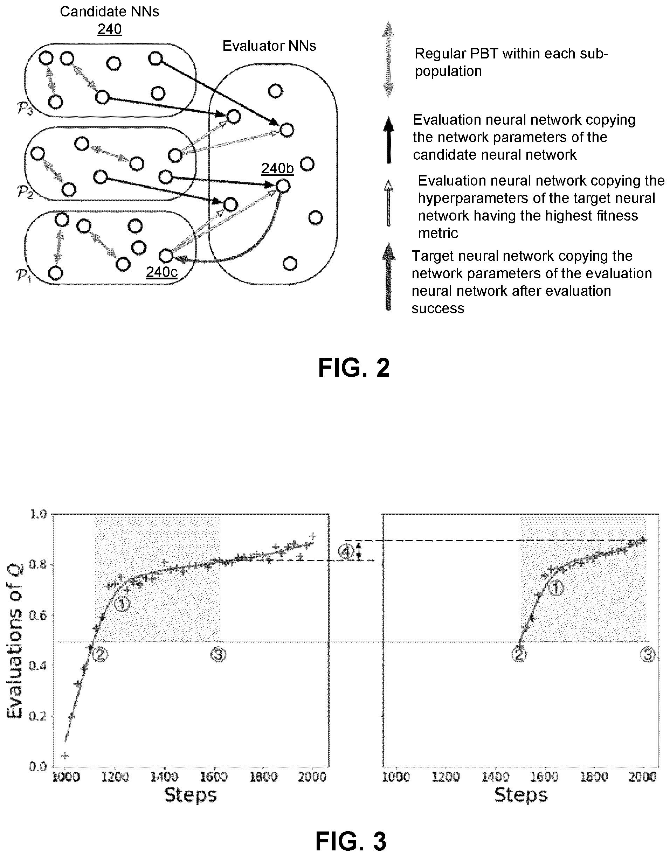

FIG. 2 illustrates an example process 200 performed by the system 100 for evaluating the candidate neural networks and updating the maintained data. As an example, FIG. 2 shows the candidate neural networks 240 partitioned into 3 partitions $\mathcal{P}_1$, $\mathcal{P}_2$, and $\mathcal{P}_3$. In general, the candidate neural networks 240 can be partitioned into $\mathcal{P}_1 ... \mathcal{P}_n$. Each particular candidate neural network $\rho$ is associated with $(\theta_\rho, h_\rho)$ where $\theta_\rho$ are neural network parameters and $h_\rho$ are training hyperparameters.

Within each partition, the system performs an *exploit-and-explore* process to update the hyperparameters of the candidates in the partition using a Population Based Training (PBT) approach. This process is described in *"Population Based Training of Neural Networks"* Jaderberg et al. in arXiv: 1711.09846 (cs.LG), November.

Briefly, within each partition, the system trains each candidate neural network 240 according to the respective hyperparameters of the candidate neural network 240. At regular intervals, the system compares the performance measures of a particular candidate neural network $\rho$, with the other candidate neural networks in the partition. If the particular candidate neural network $\rho$ has a low performance compared with the other candidate neural networks, the system performs an *exploit-and-explore* step. In the *exploit* step, the system discards the state (e.g., current values of the network parameters and the hyperparameters) of the particular candidate neural network $\rho$ and copies the network parameters and hyperparameters of a better performing candidate neural network. In the *explore* step, the system mutates the hyperparameters of the particular candidate neural network.

The system further updates of the network parameters and hyperparameters of the candidate neural networks in an inter-partition update process described as the following. For the convenience of description, the partitions $\mathcal{P}_1 ... \mathcal{P}_n$ can be regarded as being arranged in a sequence of child-parent neural networks. Specifically, $\mathcal{P}_{i-1}$ can be considered as child partition of $\mathcal{P}_i$. In other words, $\mathcal{P}_i$ is considered to be the parent partition of $\mathcal{P}_{i-1}$. Thus, $\mathcal{P}_2$ is the parent partition of $\mathcal{P}_1$, $\mathcal{P}_3$ is the parent partition of $\mathcal{P}_2$, and so on.

Each partition is associated with its own fitness function for evaluating the fitness metric. In a particular example, for the first partition $\mathcal{P}_1$, the fitness function measures the performance $Q$ of the candidate neural networks in the partition on the machine learning task, similar to a regular PBT process. For example, $Q$ can be a measurement for the prediction accuracy (e.g., a classification accuracy) on a validation set or, for reinforcement learning tasks, a measure of reward collected over a trial set of one or more task episodes.

All other partitions $\mathcal{P}_i$ with i > 1 use fitness functions that behave differently from the fitness function for $\mathcal{P}_1$. For each particular partition $\mathcal{P}_i$ with i > 1, for example, the fitness function can be designed to encourage the system to produce neural network parameters which reach high values of $Q$ when trained with the hyperparameters used in a corresponding child partition $\mathcal{P}_{i-1}$, of the particular partition $\mathcal{P}_i$. Ultimately, the system will produce neural networks which have been trained with a sequence of hyperparameters. The fitness functions can be designed to encourage the sequence of hyperparameter values to form a well-performing schedule.

The system can evaluate the fitness of the candidate neural networks 240 in a parent partition $\mathcal{P}_i$ with i > 1 using the evaluator neural networks 240b by repeatedly performing the following process.

First, the system selects a particular candidate neural network 240 for evaluation. For example, the system can select the particular $\rho$ from a parent partition as $\rho \in \bigcup_{j=2}^{P} \mathcal{P}_j$ which has least recently been evaluated. The system can identify the particular partition $\mathcal{P}_i$ that $\rho$ belongs to. The system copies the network parameters of the particular candidate neural network $\rho$ to the corresponding evaluator neural network $\eta: \theta_\eta \leftarrow \theta_\rho$. The evaluator neural network $\eta$ is considered to have been assigned to $\rho$.

Next, the system identifies a target candidate neural network 240c, represented by $\rho_{\text{child}}$, in the child partition

$\mathcal{P}_{i-1}$ of the particular partition $\mathcal{P}_i$. The target candidate neural network $\rho_{\text{child}}$ is the candidate neural network that has the highest fitness metric in the child partition $\mathcal{P}_{i-1}$. The system copies the hyperparameters of the target candidate neural network $\rho_{\text{child}}$ to the evaluator neural network $\eta$: $h_\eta \leftarrow h_{\rho_{\text{child}}}$.

Next, the system performs training of the evaluator neural network $\eta$ to update the newly assigned evaluator network parameters $\theta_\eta$ with the evaluator hyperparameters $h_\eta$ and regularly measures the objective function $Q$. The system can use the sequence of evaluations of $Q$ to generate a training curve, and use the training curve to evaluate the fitness of the particular candidate neural network $\rho$. Details of computing the fitness metric from the training curve will be described below with reference to FIG. 3. In general, the fitness metric increases with an increased rate of improvement of the training curve.

The system continues the training of the evaluator neural network $\eta$ until either a stopping criterion or a success criterion is reached. If the success criterion is reached, the system updates the maintained data for the network parameters of the target neural network with current values of the network parameters of the respective evaluator neural network when the success criterion is satisfied. That is, the system copies the evaluator neural network $\eta$'s current network parameters to the target candidate neural network $\rho_{\text{child}}$ : $\theta_{\rho_{\text{child}}} \leftarrow \theta_\eta$. The system also terminates the training of the evaluator neural network. If the stop criterion is reached, the system terminates the training without copying the evaluator neural network's current network parameters to the target candidate neural network. The stopping and the success criteria will be described in more detail below with reference to FIG. 3.

The above process can be repeated for the different candidate neural networks in the partitions $\mathcal{P}_2, \dots \mathcal{P}_P$.

FIG. 3 illustrates examples of the training curves generated by performing training of the evaluator neural network for a particular candidate neural network. The left panel of FIG. 3 shows a first training curve generated for a first candidate neural network. The right panel of FIG. 3 shows a second training curve generated for a second candidate neural network.

Each training curve is defined by a sequence of training step numbers and a respective performance metric $Q$ corresponding to each of the sequence of training step numbers. That is, each training curve is defined by a series of points $[(x_1, y_1), (x_2, y_2), \dots, (x_n, y_n)]$ where the $x$'s are regularly spaced training steps and $y$'s are the evaluated value of the performance metric $Q$ at that step. $x_1$ is the step at which the system copies the parameters of the evaluator neural network from the network parameters of its assigned candidate neural network $\rho$ and $x_n$ is its current step.

Specifically, FIG. 3 shows a comparison between the two curves as they both reach step 2000. The first evaluator neural network $\eta$ that produced the left curve copied the network parameters of its assigned candidate neural network at step 1000, while the second evaluator neural network $\kappa$ that produced the right curve copied the network parameters of its assigned candidate neural network at step 1500.

Given two evaluator neural networks $\eta$ and $\kappa$ and their respective training curves $(\mathbf{x}^\eta, \mathbf{y}^\eta)$ and $(\mathbf{x}^\kappa, \mathbf{y}^\kappa)$, the system can determine which curve improves faster. For example, the system can use a process to determine a comparison value best_score_diff $(\eta, \kappa)$ which is positive if $\eta$ is considered to be improving faster than $\kappa$ and negative if $\kappa$ is improving faster than $\eta$. In general, the process identifies an overlapping section where the two curves have similar performance and their rates of improvement can be compared. In a particular example, the process can include the following steps.

In an optional step (1), the system can smooth the first and the second training curve, e.g., by applying a Gaussian Process (GP) through each curve to smooth them. This step is helpful in contexts where $Q$ fluctuates rapidly throughout training. Let $\hat{\mathbf{y}}^\eta$ and $\hat{\mathbf{y}}^\kappa$ be the smoothed version of $\mathbf{y}^\eta$ and $\mathbf{y}^\kappa$ respectively.

In step (2), the system identifies the starting points of the overlapping sections of the two training curves. For example, the system can first identify the smoothed curve that has the highest starting performance by comparing $\hat{y}_1^\eta$ and $\hat{y}_1^\kappa$. Then, the system identifies the first point when the other smoothed curve reaches that performance for the first time. That is, say $\hat{y}_1^\eta < \hat{y}_1^\kappa$, the system finds the smallest r such that $\hat{y}_r^\eta \geq \hat{y}_1^\kappa$. The overlapping section of $(\mathbf{x}^\eta, \mathbf{y}^\eta)$ will start at $\left(x_r^\eta, y_r^\eta\right)$, and the one of $(\mathbf{x}^\kappa, \mathbf{y}^\kappa)$ at $\left(x_1^\kappa, y_1^\kappa\right)$. For example, in FIG. 3, the second training curve (on the right) starts higher and so its overlapping section starts from its beginning. The first training curve (on the left) first reaches a similar performance at around 1150 steps, which is where its overlapping section starts.

In step (3), the system identifies the length of the overlapping sections. The system can identify the maximum number of steps for which both training curves have evaluations of $Q$ data past their starting point. That is, say the overlapping sections start at $\left(x_r^\eta, y_r^\eta\right)$ and $\left(x_s^\kappa, y_s^\kappa\right)$, then the length of the overlapping sections is $n = \max(\text{len}(\mathbf{x}^\eta) - r, \text{len}(\mathbf{x}^\kappa) - s)$. In FIG. 3, the second training curve has fewer steps past its starting point and therefore constrains the length of the overlapping section.

In step (4), the system compares the best score within each overlapping section. The system finds the highest recorded evaluation of $Q$ within each curve's overlapping section and computes their difference:

$$\text{best\_score\_diff}\,(\eta, \kappa) = \max \mathbf{y}_{r:r+n}^{\eta} - \max \mathbf{y}_{s:s+n}^{\kappa}\,.$$

In certain scenarios, the two training curves do not have an overlapping section because one curve is strictly higher than the other. In this case, say the first training curve of the first evaluator neural network $\eta$ is strictly higher than the second training curve of the second evaluator neural network $\kappa$: $\min(\mathbf{y}^{\eta}) > \max(\mathbf{y}^{\kappa})$, the system can apply a penalty to the training curve of $\eta$ by a constant amount to see if, despite being higher, it is also improving faster. That is, the system shifts the training curve by as $(\mathbf{x}, \mathbf{y} - \delta)$ and checks if the value best\_score\_diff > 0. The system can try multiple values for $\delta$ in the range $[\min(\mathbf{y}^{\eta}) - \max(\mathbf{y}^{\kappa}), \min(\mathbf{y}^{\eta}) - \min(\mathbf{y}^{\kappa})]$. If some values of $\delta$ lead to a positive score, the system returns the highest found score for best\_score\_diff $(\eta, \kappa)$. Otherwise, the system sets best\_score\_diff $(\eta, k) = 0$.

The system can use the value best\_score\_diff $(\eta, \kappa)$ to determine the fitness metrics of the candidate neural networks of a parent partition $\mathcal{P}_i$. First, the system finds the set $\Phi$ of candidate neural networks in $\mathcal{P}_i$ which currently have an assigned evaluator neural network. Next, for each candidate neural network in the set, the system compares its training curve to the training curve of each other member in the set. The system then sums the computed best\_score\_diff over all comparisons. Call $\eta_\rho$ the evaluator of $\rho$, the system sets:

$$\text{fitness}\,(\rho_j) = \sum_{\rho_k \in \Phi} \text{best\_score\_diff}\,\left(\eta_{\rho_j}, \eta_{\rho_k}\right)$$

In general, the system keeps evaluator neural network training as long as it is plausible that it will reach a higher performance than the one of its target candidate neural network $\rho_{\text{child}}$. The system can determine whether an evaluator neural network $\eta$ is likely to outperform its target $\rho_{\text{child}}$ by comparing their respective training curves. If the system determines that the training curve of $\eta$ is improving statistically significantly faster than $\rho_{\text{child}}$, this would imply that the network parameters of the evaluator neural network $\eta$ are likely to result in better long-term performance. The system can compute a statistic metric that characterizes a statistical significance in the performance difference between $\eta$ and $\rho_{\text{child}}$ according to a comparison between their respective training curves. An example process for determining the statistical metric is described below.

The training curve of $\eta$ starts from when it copied the network parameters of its assigned candidate neural network $\rho$. The training curve of $\rho_{\text{child}}$ starts from when it last copied the network parameters of another candidate neural network via an exploit-and-explore step.

Given the training curves $(\mathbf{x}^{\eta}, \mathbf{y}^{\eta})$ of $\eta$ and $(\mathbf{x}^{\rho_{\text{child}}}, \mathbf{y}^{\rho_{\text{child}}})$ of $\rho_{\text{child}}$, the system starts by extracting overlapping regions $\left(\mathbf{x}_{r:r+n}^{\eta}, \mathbf{y}_{r:r+n}^{\eta}\right)$ and $\left(\mathbf{x}_{s:s+n}^{\rho_{\text{child}}}, \mathbf{y}_{s:s+n}^{\rho_{\text{child}}}\right)$ as described in the process with reference to FIG. 3. The system then performs a pairwise comparison of each of the points in $\mathbf{y}_{r:r+n}^{\eta}$ and $\mathbf{y}_{s:s+n}^{\rho_{\text{child}}}$: $y_{r+1}^{\eta} > y_{s+1}^{\rho_{\text{child}}}, \ldots, y_{r+n}^{\eta} > y_{s+n}^{\rho_{\text{child}}}$. Let $k$ be the number of times $\mathbf{y}^{\eta}$ was higher than $\mathbf{y}^{\rho_{\text{child}}}$. The system performs a binomial test with $k$ successes and n trials and computes the p-value. This quantity is termed as the binom\_test $(\eta, \rho_{\text{child}})$ and is the statistical metric that characterizes a statistical significance in the performance difference between $\eta$ and $\rho_{\text{child}}$. A smaller value of binom\_test $(\eta, \rho_{\text{child}})$ indicates a greater statistical significance in the performance difference.

For the stopping criterion, at regular intervals, the system compares the training curve of an evaluator neural network with the training curve of the corresponding target candidate neural network $\rho_{\text{child}}$ using the procedure described above. An evaluator neural network that has been training for T steps will stop if the evaluator neural network's curve does overlap with $\rho_{\text{child}}$s curve but binom\_test $(\eta, \rho_{\text{child}})$ is greater than $pstat + \max(0, 1 - T/\text{max\_eval\_steps})$ where $p_{\text{stat}}$ is a threshold value for the statistical metric that characterizes a statistical significance in the performance difference between $\eta$ and $\rho_{\text{child}}$.

The evaluator neural network $\eta$ succeeds when it is determined to be better than $\rho_{\text{child}}$. In this case, the system discards the current network parameters of $\rho_{\text{child}}$ and copies the network parameters of the evaluator neural network: $\theta_{\rho_{\text{child}}} \leftarrow \theta_{\eta}$. The conditions for evaluator neural network success are: (1) best\_score\_diff $(\eta, \rho_{\text{child}}) > 0$, and (2) binom\_test $(\eta, \rho_{\text{child}}) < p_{\text{stat}}$.

Further, the system stops the training of the evaluator neural network if either the candidate neural network it is assigned to $\rho$ or its target $\rho_{\text{child}}$ loses an evolution event and executes an exploit-and-explore step. The system can then choose a new candidate neural network to evaluate.

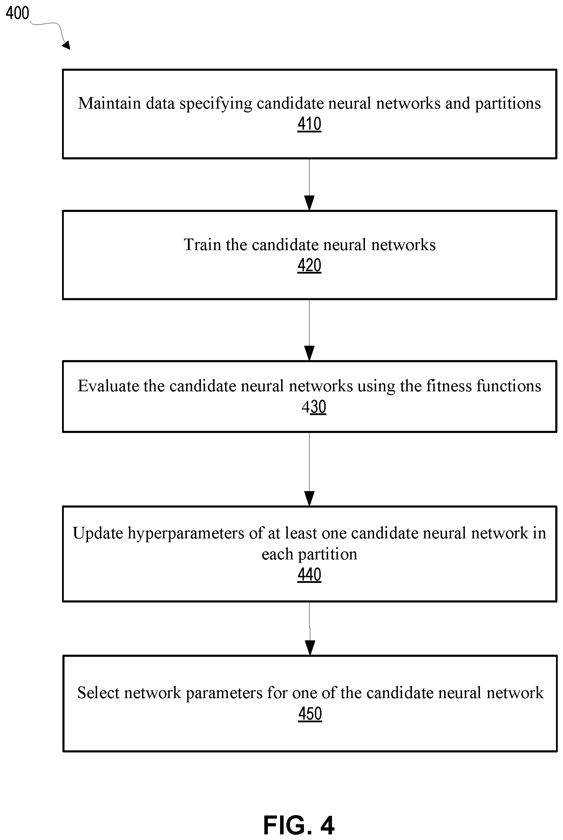

FIG. 4 is a flow diagram illustrating a training process 400 for training a neural network. For convenience, the process 400 will be described as being performed by a system of one or more computers located in one or more locations. For example, a training system, e.g., the training system 100 of FIG. 1, appropriately programmed in accordance with this specification, can perform the process 400.

In step 410, the system maintains data specifying (i) a plurality of candidate neural networks and (ii) a partitioning of the plurality of candidate neural networks into a plurality of partitions. The maintained data includes: for each of the candidate neural networks, data specifying: (i) respective values of a plurality of network parameters for the candidate neural network and (ii) respective values of one or more hyperparameters for the candidate neural network, and data specifying a respective fitness function for each of the partitions that is used to evaluate each of the candidate neural networks in the partition. The fitness functions for at least two of the partitions are different from one another. An example of the partitioning of the plurality of candidate neural networks is illustrated by FIG. 2.

In step 420, the system trains each of the candidate neural networks to update the respective values of the plurality of network parameters for the candidate neural network.

In step 430, the system evaluates each candidate neural network using the respective fitness function for the partition to which the candidate neural network belongs to determine a respective fitness metric for the candidate neural network. An example of evaluating the candidate neural network is described above with reference to FIG. 2.

In step 440, for each partition, the system updates the respective values of the one or more hyperparameters for at least one of the candidate neural networks in the partition based on the respective fitness metrics of the candidate neural networks in the partition. An example of updating the hyperparameters is described above with reference to FIG. 2.

The system can repeatedly perform the operations in steps 420-440. After repeatedly performing the operations, in step 450, the system selects, from the maintained data, the respective values of the network parameters of one of the candidate neural networks.

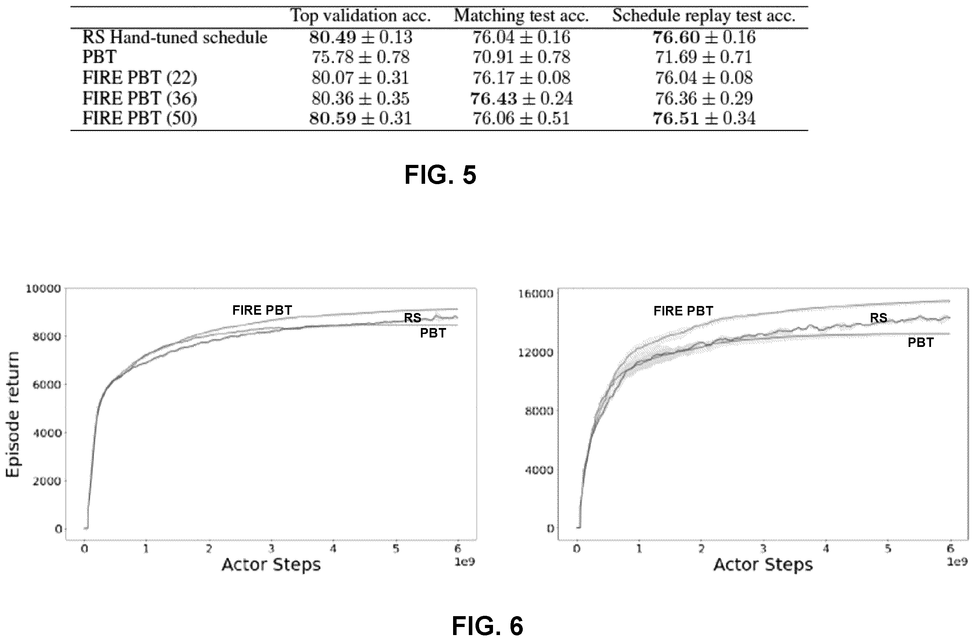

FIG. 5 shows a comparison of the performances of using different training methods for training a neural network for performing an image classification task. In particular, the neural network has an architecture of the ResNet-50. The training data and validation data are obtained from the ImageNet dataset. Each training method optimizes the learning rate for the training processes.

The training methods under comparison include: a random search process with a hand-tuned schedule (RS with hand-tuned schedule), a conventional population-based training method (PBT), an enhanced PBT training method as described with references to FIGs. 1-4 that uses 22 candidate neural networks (FIRE PBT 22), the enhanced PBT training method that uses 36 candidate neural networks (FIRE PBT 36), and the enhanced PBT training method that uses 50 candidate neural networks (FIRE PBT 50).

For each training method, 5 experiment runs were performed. The table of FIG. 5 includes the mean and standard deviation of the highest validation score, the test score that was achieved at the same point, and the test score that was achieved by replaying the same hyperparameter schedule and training on the full training set. As shown in FIG. 5, the FIRE PBT significantly outperforms PBT and achieves results similar to those of Random Search with a hand-tuned schedule.

FIG. 6 shows a comparison of the performances of using different training methods for training a neural network for performing reinforcement learning tasks. The neural network is trained to control an agent to perform the OpenAI Gym tasks of Ant-v1 and Humanoid-v1. The methods are used to optimize the learning rate and the $\varepsilon_\eta$ hyperparameter which sets the size of a trust region.

For each method, the system performs 3 experiment runs. The training methods under comparison include: a random search process (Random Search), a conventional population-based training method (PBT), and the enhanced PBT training method as described with references to FIGs. 1-4 (FIRE PBT).

FIG. 6 shows the distribution across experiments of the top average episode return scored by a candidate neural network at each step on the Ant-v1 task (left panel) and the Humanoid-v1 task (right panel). As shown in FIG. 6, the FIRE PBT significantly outperforms PBT and the random search methods.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. Embodiments of the subject matter and the functional operations described in this specification can be implemented in digital electronic circuitry, in tangibly-embodied computer software or firmware, in computer hardware, including the structures disclosed in this specification or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-

**EP 4 327 245 B1**

purpose hardware accelerator units for processing common and compute-intensive parts of machine learning training or production, i.e., inference, workloads.

Machine learning models can be implemented and deployed using a machine learning framework, .e.g., a TensorFlow framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

**Claims**

1. A computer-implemented method for training a neural network to perform a machine learning task, comprising:

maintaining data (120) specifying a plurality of candidate neural networks (140, 240) and a partitioning of the plurality of candidate neural networks into a plurality of partitions (130, $P_1$, $P_2$, $P_3$), wherein the maintained data comprises:

for each of the candidate neural networks, data specifying: respective values of a plurality of network parameters (142) for the candidate neural network and respective values of one or more hyperparameters (144) for the candidate neural network, and
data specifying a respective fitness function (150) for each of the partitions that is used to evaluate each of the candidate neural networks in the partition, wherein the fitness functions for at least two of the partitions are different from one another and wherein:

for a first partition in the plurality of partitions, the fitness function measures a performance of the candidate neural networks in the partition on the machine learning task; and
for at least a second partition in the plurality of partitions, the fitness function measures, for each candidate neural network in the second partition, a relative rate of improvement in the performance of a respective evaluator neural network that has the same respective network parameter values as the candidate neural network on the machine learning task;

repeatedly performing operations, comprising:

training each of the candidate neural networks to update the respective values of the plurality of network parameters for the candidate neural network, wherein training each of the candidate neural networks comprises training at least two of the candidate neural networks in parallel;
evaluating each candidate neural network using the respective fitness function for the partition to which the candidate neural network belongs to determine a respective fitness metric (146) for the candidate neural network, wherein for each candidate neural network in the second partition, evaluating the candidate neural network using the respective fitness function comprises:

performing, in parallel with training the at least two of the candidate neural networks, training of the respective evaluator neural network for the candidate neural network to update the network parameter values of the evaluator neural network;
generating data specifying a training curve for the candidate neural network during the training of the respective evaluator neural network, the data specifying the training curve including a sequence of training step numbers and a respective performance metric corresponding to each of the sequence of training step numbers; and

computing the fitness metric of the candidate neural network based on at least the training curve for the candidate neural network; and

for each partition, updating the respective values of the one or more hyperparameters for at least one of the candidate neural networks in the partition based on the respective fitness metrics of the candidate neural networks in the partition; and

after repeatedly performing the operations, selecting, from the maintained data, the respective values of the network parameters of one of the candidate neural networks (180).

2. The method of claim 1, further comprising:

for each of the partitions (130, $P_1$, $P_2$, $P_3$), identifying the candidate neural network in the partition that has a maximum fitness metric as a target neural network (240c) for the partition; and
wherein for each candidate neural network in the second partition, the respective evaluator neural network for the candidate neural network has the same respective hyperparameter values (144) as the target neural network in a corresponding partition in the plurality of partitions that is different from the second partition.

3. The method of claim 1, wherein for each candidate neural network in the second partition, computing the fitness metric (146) comprises:

computing a plurality of comparison results for comparing the training curve for the candidate neural network with the training curves for the other candidate neural networks in the second partition; and
computing the fitness metric of the candidate neural network by combining the plurality of comparison results.

4. The method of claim 3, wherein computing one of the plurality of comparison results for the candidate neural network in the second partition comprises:

identifying, in the training curves of the candidate neural network and a second candidate neural network in the partition, overlapping curve sections that include a first curve section in the candidate neural network and a second curve section in the second candidate neural network;
identifying a first maximum performance metric in the first curve section;
identifying a second maximum performance metric in the second curve section; and
computing the comparison result according to a comparison between the first maximum performance metric and the second maximum performance metric.

5. The method of claim 4, wherein identifying the overlapping curve sections comprises:

identifying, from the training curves of the candidate neural network and the second candidate neural network, a first training curve and a second training curve, wherein the first training curve has a higher performance metric at the beginning time step of the training curve;
identifying the beginning time step of the first training curve as the starting point of the overlapping curve section of the first training curve; and
identifying the earliest respective time step in the second training curve that corresponds to a performance metric reaching or exceeding the performance metric in the first training curve at the beginning time step of the first training curve.

6. The method of claim 4 or 5, wherein computing the comparison result further comprises:
performing smoothing operations on the training curves before identifying the overlapping curve sections.

7. The method of any of claims 4-6, wherein computing the comparison result further comprises:
in response to not identifying any overlapping curve sections in the training curves, adjusting one of the training curves by subtracting each of the performance metric values of the training curve by a value.

8. The method of any preceding claim, wherein for each candidate neural network in the second partition, the method further comprises:

during the training of the respective evaluator neural network, determining whether a success criterion is satisfied;

and
in response to the success criterion being satisfied:

updating the maintained data (120) for the network parameters (142) of the target neural network in the corresponding partition that is different from the second partition with current values of the network parameters of the respective evaluator neural network when the success criterion is satisfied; and terminating the training of the respective evaluator neural network.

9. The method of claim 8, wherein determining whether the success criterion is satisfied comprises:

computing a comparison value for comparing the training curve for the respective evaluator neural network and the training curve for the target neural network; and determining whether the success criterion is satisfied based on at least the comparison value.

10. The method of claim 9, further comprising:
computing a statistical metric for comparing the training curve for the respective evaluator neural network and the training curve for the respective target neural network; and determining that the success criterion is satisfied in response to the comparison value being greater than 0 and the statistical metric being below a threshold value.

11. A system comprising:

one or more computers; and one or more storage devices storing instructions that when executed by the one or more computers, cause the one or more computers to perform operations of the respective method of any one of claims 1-10.

12. One or more computer-readable storage media storing instructions that, when executed by one or more computers, cause the one or more computers to perform operations of the respective method of any one of claims 1-10.

**Patentansprüche**

1. Computerimplementiertes Verfahren zum Trainieren eines neuronalen Netzes zum Durchführen einer Maschinenlernaufgabe, umfassend:
Verwahren von Daten (120), die eine Vielzahl von neuronalen Kandidatennetzen (140, 240) und eine Partitionierung der Vielzahl von neuronalen Kandidatennetzen in eine Vielzahl von Partitionen (130, $P_1$, $P_2$, $P_3$) spezifizieren, wobei die verwahrten Daten Folgendes umfassen:

für jedes der neuronalen Kandidatennetze Daten, die Folgendes spezifizieren: jeweilige Werte einer Vielzahl von Netzparametern (142) für das neuronale Kandidatennetz und jeweilige Werte von einem oder mehreren Hyperparametern (144) für das neuronale Kandidatennetz, und
Daten, die eine jeweilige Fitnessfunktion (150) für jede der Partitionen spezifizieren, die verwendet wird, um jedes der neuronalen Kandidatennetze in der Partition zu bewerten, wobei die Fitnessfunktionen für mindestens zwei der Partitionen voneinander verschieden sind, und wobei:

für eine erste Partition in der Vielzahl von Partitionen die Fitnessfunktion eine Leistung der neuronalen Kandidatennetze in der Partition bei der Maschinenlernaufgabe misst; und
für mindestens eine zweite Partition in der Vielzahl von Partitionen die Fitnessfunktion für jedes neuronale Kandidatennetz in der zweiten Partition eine relative Verbesserungsrate der Leistung eines jeweiligen neuronalen Bewerternetzes misst, das die gleichen jeweiligen Netzparameterwerte wie das neuronale Kandidatennetz bei der Maschinenlernaufgabe aufweist;
wiederholtes Durchführen von Operationen, umfassend:

Trainieren jedes der neuronalen Kandidatennetze, um die jeweiligen Werte der Vielzahl von Netzparametern für das neuronale Kandidatennetz zu aktualisieren, wobei das Trainieren jedes der neuronalen Kandidatennetze paralleles Trainieren von mindestens zwei der neuronalen Kandidatennetze umfasst;
Bewerten jedes neuronalen Kandidatennetzes unter Verwendung der jeweiligen Fitnessfunktion für die Partition, zu der das neuronale Kandidatennetz gehört, um eine jeweilige Fitnessmetrik (146) für das neuronale Kandidatennetz zu bestimmen, wobei für jedes neuronale Kandidatennetz in der zweiten Partition Bewerten des neuronalen Kandidatennetzes unter Verwendung der jeweiligen Fitnessfunktion umfasst:

Durchführen eines Trainings des jeweiligen neuronalen Bewerternetzes für das neuronale Kandidatennetz parallel zum Trainieren der mindestens zwei neuronalen Kandidatennetze, um die Netzparameterwerte des neuronalen Bewerternetzes zu aktualisieren;

Erzeugen von Daten, die eine Trainingskurve für das neuronale Kandidatennetz während des Trainings des jeweiligen neuronalen Bewerternetzes spezifizieren, wobei die Daten, die die Trainingskurve spezifizieren, eine Folge von Trainingsschrittnummern und eine jeweilige Leistungsmetrik beinhalten, die jeder der Folge von Trainingsschrittnummern entspricht; und

Berechnen der Fitnessmetrik des neuronalen Kandidatennetzes basierend mindestens auf der Trainingskurve für das neuronale Kandidatennetz; und

für jede Partition Aktualisieren der jeweiligen Werte des einen oder der mehreren Hyperparameter für mindestens eines der neuronalen Kandidatennetze in der Partition basierend auf den jeweiligen Fitnessmetriken der neuronalen Kandidatennetze in der Partition; und

nach wiederholtem Durchführen der Operationen, Auswählen der jeweiligen Werte der Netzparameter eines der neuronalen Kandidatennetze (180) aus den verwahrten Daten.

2. Verfahren nach Anspruch 1, ferner Folgendes umfassend:

für jede der Partitionen ($130, P_1, P_2, P_3$) Identifizieren des neuronalen Kandidatennetzes in der Partition, das eine maximale Fitnessmetrik aufweist, als neuronales Zielnetz (240c) für die Partition; und

wobei für jedes neuronale Kandidatennetz in der zweiten Partition das jeweilige neuronale Bewerternetz für das neuronale Kandidatennetz die gleichen jeweiligen Hyperparameterwerte (144) aufweist wie das neuronale Zielnetz in einer entsprechenden Partition in der Vielzahl von Partitionen, die sich von der zweiten Partition unterscheidet.

3. Verfahren nach Anspruch 1, wobei für jedes neuronale Kandidatennetz in der zweiten Partition das Berechnen der Fitnessmetrik (146) Folgendes umfasst:

Berechnen einer Vielzahl von Vergleichsergebnissen zum Vergleichen der Trainingskurve für das neuronale Kandidatennetz mit den Trainingskurven für die anderen neuronalen Kandidatennetze in der zweiten Partition; und

Berechnen der Fitnessmetrik des neuronalen Kandidatennetzes durch Kombinieren der Vielzahl von Vergleichsergebnissen.

4. Verfahren nach Anspruch 3, wobei das Berechnen eines der Vielzahl von Vergleichsergebnissen für das neuronale Kandidatennetz in der zweiten Partition Folgendes umfasst:

Identifizieren von überlappenden Kurvenabschnitten in den Trainingskurven des neuronalen Kandidatennetzes und eines zweiten neuronalen Kandidatennetzes in der Partition, die einen ersten Kurvenabschnitt im neuronalen Kandidatennetz und einen zweiten Kurvenabschnitt im zweiten neuronalen Kandidatennetz beinhalten;

Identifizieren einer ersten maximalen Leistungsmetrik im ersten Kurvenabschnitt;

Identifizieren einer zweiten maximalen Leistungsmetrik im zweiten Kurvenabschnitt; und

Berechnen des Vergleichsergebnisses anhand eines Vergleichs zwischen der ersten maximalen Leistungsmetrik und der zweiten maximalen Leistungsmetrik.

5. Verfahren nach Anspruch 4, wobei das Identifizieren der überlappenden Kurvenabschnitte Folgendes umfasst:

Identifizieren einer ersten Trainingskurve und einer zweiten Trainingskurve aus den Trainingskurven des neuronalen Kandidatennetzes und des zweiten neuronalen Kandidatennetzes, wobei die erste Trainingskurve eine höhere Leistungsmetrik am Anfangszeitschritt der Trainingskurve aufweist;

Identifizieren des Anfangszeitschritts der ersten Trainingskurve als Startpunkt des überlappenden Kurvenabschnitts der ersten Trainingskurve; und

Identifizieren des frühesten jeweiligen Zeitschritts in der zweiten Trainingskurve, der einer Leistungsmetrik entspricht, die die Leistungsmetrik in der ersten Trainingskurve zu Beginn des Zeitschritts der ersten Trainingskurve erreicht oder überschreitet.

6. Verfahren nach Anspruch 4 oder 5, wobei das Berechnen des Vergleichsergebnisses ferner Folgendes umfasst: Durchführen von Glättungsoperationen an den Trainingskurven vor Identifizieren der überlappenden Kurvenabschnitte.

7. Verfahren nach Anspruch 4 bis 6, wobei das Berechnen des Vergleichsergebnisses ferner Folgendes umfasst: als Reaktion darauf, dass keine sich überlappenden Kurvenabschnitte in den Trainingskurven identifiziert wurden, Anpassen einer der Trainingskurven durch Subtraktion jedes der Leistungsmetrikwerte der Trainingskurve um einen Wert.

8. Verfahren nach einem der vorhergehenden Ansprüche, wobei für jedes neuronale Kandidatennetz in der zweiten Partition das Verfahren ferner Folgendes umfasst:

   während des Trainings des jeweiligen neuronalen Bewerternetzes Bestimmen, ob ein Erfolgskriterium erfüllt ist; und
   als Reaktion darauf, dass das Erfolgskriterium erfüllt ist:

   Aktualisieren der verwahrten Daten (120) für die Netzparameter (142) des neuronalen Zielnetzes in der entsprechenden Partition, die sich von der zweiten Partition unterscheidet, mit aktuellen Werten der Netzparameter des jeweiligen neuronalen Bewerternetzes, wenn das Erfolgskriterium erfüllt ist; und
   Beenden des Trainings des jeweiligen neuronalen Bewerternetzes.

9. Verfahren nach Anspruch 8, wobei das Bestimmen, ob das Erfolgskriterium erfüllt ist, Folgendes umfasst:

   Berechnen eines Vergleichswerts zum Vergleichen der Trainingskurve für das jeweilige neuronale Bewerternetz und der Trainingskurve für das neuronale Zielnetz; und
   Bestimmen, ob das Erfolgskriterium erfüllt ist, mindestens basierend auf dem Vergleichswert.

10. Verfahren nach Anspruch 9, ferner umfassend:

    Berechnen einer statistischen Metrik zum Vergleichen der Trainingskurve für das jeweilige neuronale Bewerternetz und der Trainingskurve für das jeweilige neuronale Zielnetz; und
    Bestimmen, dass das Erfolgskriterium erfüllt ist, wenn der Vergleichswert größer als 0 ist und die statistische Metrik unter einem Schwellenwert liegt.

11. System, Folgendes umfassend:

    einen oder mehrere Computer; und
    ein oder mehrere Speichervorrichtungen, die Anweisungen speichern, die bei Ausführung durch den einen oder die mehreren Computer den einen oder die mehreren Computer dazu veranlassen, Operationen des jeweiligen Verfahrens nach einem der Ansprüche 1-10 durchzuführen.

12. Ein oder mehrere computerlesbare Speichermedien, die Anweisungen speichern, die, wenn sie von einem oder mehreren Computern ausgeführt werden, den einen oder die mehreren Computer dazu veranlassen, die Operationen des jeweiligen Verfahrens nach einem der Ansprüche 1-10 durchzuführen.

## Revendications

1. Procédé mis en œuvre par ordinateur pour l'entraînement d'un réseau neuronal destiné à réaliser une tâche d'apprentissage automatique, comprenant :
   le maintien de données (120) spécifiant une pluralité de réseaux neuronaux candidats (140, 240) et un partitionnement de la pluralité de réseaux neuronaux candidats en une pluralité de partitions (130, $P_1$, $P_2$, $P_3$), dans lequel les données maintenues comprennent :

   pour chacun des réseaux neuronaux candidats, des données spécifiant : les valeurs respectives d'une pluralité de paramètres de réseau (142) pour le réseau neuronal candidat et des valeurs respectives d'un ou plusieurs hyperparamètres (144) pour le réseau neuronal candidat, et

des données spécifiant une fonction d'aptitude respective (150) pour chacune des partitions qui est utilisée pour évaluer chacun des réseaux neuronaux candidats dans la partition, dans lequel les fonctions d'aptitude pour au moins deux des partitions sont différentes les unes des autres et dans lequel :

pour une première partition dans la pluralité de partitions, la fonction d'aptitude mesure une performance des réseaux neuronaux candidats dans la partition sur la tâche d'apprentissage automatique ; et

pour au moins une seconde partition dans la pluralité de partitions, la fonction d'aptitude mesure, pour chaque réseau neuronal candidat dans la seconde partition, un taux relatif d'amélioration des performances d'un réseau neuronal évaluateur respectif qui a les mêmes valeurs de paramètres de réseau respectives que le réseau neuronal candidat sur la tâche d'apprentissage automatique ;

la réalisation de manière répétée d'opérations, comprenant :

l'entraînement de chacun des réseaux neuronaux candidats pour mettre à jour les valeurs respectives de la pluralité de paramètres de réseau pour le réseau neuronal candidat, dans lequel l'entraînement de chacun des réseaux neuronaux candidats comprend l'entraînement d'au moins deux des réseaux neuronaux candidats en parallèle ;

l'évaluation de chaque réseau neuronal candidat à l'aide de la fonction d'aptitude respective pour la partition à laquelle appartient le réseau neuronal candidat afin de déterminer une métrique d'aptitude respective (146) pour le réseau neuronal candidat, dans lequel, pour chaque réseau neuronal candidat dans la seconde partition, l'évaluation du réseau neuronal candidat à l'aide de la fonction d'aptitude respective comprend :

la réalisation, parallèlement à l'entraînement des au moins deux des réseaux neuronaux candidats, de l'entraînement du réseau neuronal évaluateur respectif pour le réseau neuronal candidat afin de mettre à jour les valeurs des paramètres de réseau du réseau neuronal évaluateur ;

la génération de données spécifiant une courbe d'entraînement pour le réseau neuronal candidat pendant l'entraînement du réseau neuronal évaluateur respectif, les données spécifiant la courbe d'entraînement comportant une séquence de numéros d'étapes d'entraînement et une métrique de performance respective correspondant à chacune des séquences de numéros d'étapes d'entraînement ; et

le calcul de la métrique d'aptitude du réseau neuronal candidat sur la base d'au moins la courbe d'entraînement du réseau neuronal candidat ; et

pour chaque partition, la mise à jour des valeurs respectives des un ou plusieurs hyperparamètres pour au moins l'un des réseaux neuronaux candidats dans la partition sur la base des mesures d'aptitude respectives des réseaux neuronaux candidats dans la partition ; et

après la réalisation à plusieurs reprises des opérations, la sélection, à partir des données maintenues, des valeurs respectives des paramètres de réseau de l'un des réseaux neuronaux candidats (180).

2. Procédé selon la revendication 1, comprenant également :

pour chacune des partitions (130, $P_1$, $P_2$, $P_3$), l'identification du réseau neuronal candidat dans la partition qui a une métrique d'aptitude maximale comme réseau neuronal cible (240c) pour la partition ; et

dans lequel pour chaque réseau neuronal candidat dans la seconde partition, le réseau neuronal évaluateur respectif pour le réseau neuronal candidat a les mêmes valeurs d'hyperparamètres (144) respectives que le réseau neuronal cible dans une partition correspondante dans la pluralité de partitions qui est différente de la seconde partition.

3. Procédé selon la revendication 1, dans lequel, pour chaque réseau neuronal candidat de la seconde partition, le calcul de la métrique d'aptitude (146) comprend :

le calcul d'une pluralité de résultats de comparaison pour comparer la courbe d'entraînement du réseau neuronal candidat avec les courbes d'entraînement des autres réseaux neuronaux candidats dans la seconde partition ; et

le calcul de la métrique d'aptitude du réseau neuronal candidat en combinant la pluralité des résultats de comparaison.

4. Procédé selon la revendication 3, dans lequel le calcul d'un résultat de comparaison parmi la pluralité de résultats de comparaison pour le réseau neuronal candidat dans la seconde partition comprend :

l'identification, dans les courbes d'entraînement du réseau neuronal candidat et d'un second réseau neuronal candidat dans la partition, de sections de courbes qui se chevauchent et qui comportent une première section de courbe dans le réseau neuronal candidat et une seconde section de courbe dans le second réseau neuronal candidat ;
l'identification d'une première métrique de performance maximale dans la première section de courbe ;
l'identification d'une seconde métrique de performance maximale dans la seconde section de courbe ; et
le calcul du résultat de comparaison selon une comparaison entre la première métrique de performance maximale et la seconde métrique de performance maximale.

5. Procédé selon la revendication 4, dans lequel l'identification des sections de courbe qui se chevauchent comprend :

l'identification, à partir des courbes d'entraînement du réseau neuronal candidat et du second réseau neuronal candidat, d'une première courbe d'entraînement et d'une seconde courbe d'entraînement, dans lequel la première courbe d'entraînement possède une métrique de performance plus élevée à l'étape temporelle de début de la courbe d'entraînement ;
l'identification de l'étape temporelle de début de la première courbe d'entraînement comme le point de départ de la section de courbe de chevauchement de la première courbe d'entraînement ; et
l'identification de l'étape temporelle respective la plus ancienne dans la seconde courbe d'entraînement qui correspond à une métrique de performance atteignant ou dépassant la métrique de performance dans la première courbe d'entraînement à l'étape temporelle de début de la première courbe d'entraînement.

6. Procédé selon la revendication 4 ou 5, dans lequel le calcul du résultat de comparaison comprend également :
la réalisation d'opérations de lissage sur les courbes d'entraînement avant d'identifier les sections de courbes qui se chevauchent.

7. Procédé selon l'une quelconque des revendications 4 à 6, dans lequel le calcul du résultat de comparaison comprend également :
en réponse à l'absence d'identification de sections de courbes qui se chevauchent dans les courbes d'entraînement, l'ajustement d'une des courbes d'entraînement en soustrayant une valeur à chacune des valeurs de métrique de performance de la courbe d'entraînement.

8. Procédé selon une quelconque revendication précédente, dans lequel pour chaque réseau neuronal candidat dans la seconde partition, le procédé comprend également :

lors de l'entraînement du réseau neuronal évaluateur respectif,
le fait de déterminer si un critère de réussite est satisfait ; et
en réponse au critère de succès satisfait :

la mise à jour des données maintenues (120) pour les paramètres de réseau (142) du réseau neuronal cible dans la partition correspondante qui est différente de la seconde partition avec les valeurs actuelles des paramètres de réseau du réseau neuronal évaluateur respectif lorsque le critère de réussite est satisfait ; et
le fait de mettre fin à l'entraînement du réseau neuronal évaluateur respectif.

9. Procédé selon la revendication 8, dans lequel la détermination de la satisfaction du critère de réussite comprend :

le calcul d'une valeur de comparaison pour comparer la courbe d'entraînement du réseau neuronal évaluateur respectif et la courbe d'entraînement du réseau neuronal cible ; et
le fait de déterminer si le critère de réussite est satisfait sur la base d'au moins la valeur de comparaison.

10. Procédé selon la revendication 9, comprenant également :

le calcul d'une métrique statistique pour comparer la courbe d'entraînement du réseau neuronal évaluateur respectif et la courbe d'entraînement du réseau neuronal cible ; et
la détermination que le critère de réussite est satisfait en réponse à la valeur de comparaison supérieure à 0 et à la métrique statistique inférieure à une valeur seuil.

11. Système comprenant :

un ou plusieurs ordinateurs ; et
un ou plusieurs dispositifs de stockage stockant des instructions qui, lorsqu'elles sont exécutées par les un ou plusieurs ordinateurs, amènent les un ou plusieurs ordinateurs à réaliser des opérations du procédé respectif selon l'une quelconque des revendications 1 à 10.

12. Un ou plusieurs supports de stockage lisibles par ordinateur stockant des instructions qui, lorsqu'elles sont exécutées par un ou plusieurs ordinateurs, amènent les un ou plusieurs ordinateurs à réaliser des opérations du procédé respectif selon l'une quelconque des revendications 1 à 10.

Training data 110

Training system 100

Training engine 160

Partition 130

Candidate NN 140

NN parameters 142

Hyperparameters 144

Fitness metric 146

Fitness function 150

Maintained data 120

Evaluator neural networks 140b

Hyperparameter update engine 170

Trained model 180

FIG. 1

Candidate NNs
240

Evaluator NNs

240b

240c

$\mathcal{P}_3$

$\mathcal{P}_2$

$\mathcal{P}_1$

Regular PBT within each sub-population

Evaluation neural network copying the network parameters of the candidate neural network

Evaluation neural network copying the hyperparameters of the target neural network having the highest fitness metric

Target neural network copying the network parameters of the evaluation neural network after evaluation success

FIG. 2

FIG. 3

400

Maintain data specifying candidate neural networks and partitions
410

Train the candidate neural networks
420

Evaluate the candidate neural networks using the fitness functions
430

Update hyperparameters of at least one candidate neural network in each partition
440

Select network parameters for one of the candidate neural network
450

# FIG. 4

|  | Top validation acc. | Matching test acc. | Schedule replay test acc. |
|---|---|---|---|
| RS Hand-tuned schedule | $80.49 \pm 0.13$ | $76.04 \pm 0.16$ | $\mathbf{76.60 \pm 0.16}$ |
| PBT | $75.78 \pm 0.78$ | $70.91 \pm 0.78$ | $71.69 \pm 0.71$ |
| FIRE PBT (22) | $80.07 \pm 0.31$ | $76.17 \pm 0.08$ | $76.04 \pm 0.08$ |
| FIRE PBT (36) | $80.36 \pm 0.35$ | $\mathbf{76.43 \pm 0.24}$ | $76.36 \pm 0.29$ |
| FIRE PBT (50) | $80.59 \pm 0.31$ | $76.06 \pm 0.51$ | $\mathbf{76.51 \pm 0.34}$ |

**FIG. 5**

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021097443 A1

- US 2020320399 A1

**Non-patent literature cited in the description**

- **DOMHAN et al.** Speeding up Automatic Hyperparameter Optimization of Deep Neural Networks by Extrapolation of Learning Curves. *PROCEEDINGS OF THE 24TH INTERNATIONAL JOINT CONFERENCE ON ARTIFICIAL INTELLIGENCE*, 25 July 2015

- **JADERBERG et al.** Population Based Training of Neural Networks. *arXiv: 1711.09846*